# EUROPEAN PATENT APPLICATION

(11) **EP 1 460 819 A2**
(43) Date of publication of application: **22.09.2004**
(21) Application number: 04006741.5
(22) Date of filing: 19.03.2004
(51) Int. Cl.: H04L 29/06

(54) **Method and system for handling traffic for server systems**

(30) Priority: 21.03.2003 US 456831 P; 28.03.2003 US 458719 P; 15.04.2003 US 463014 P
(71) Applicant: Broadcom Corporation, Irvine, California 92618-7013 (US)
(72) Inventor: Kalkunte, Mohan, 94087 Sunnyvale California (US); Lund, Martn, 95025 Menlo Park CA (US)
(74) Representative: Jehle, Volker Armin, Dipl.-Ing.

(57) **Abstract**

Aspects for processing data in a server may include receiving a packet and determining a function associated with the packet. A blade server handling the function associated with the packet may be determined and the packet may be steered to that blade server. At least one association may be generated or created between a particular characteristic of a packet and a particular function associated with that packet. At least one blade server may be assigned to handle the particular function associated with a packet. The particular characteristic of the packet may include, for example, a packet type, a field within the packet and/or a flag within a portion of the packet. Steered packets may be processed by one or more blade servers that may be adapted to handle the function associated with the packets. A switch blade may be utilized to control steering of the received packets.

## Description

### CROSS-REFERENCE TO RELATED APPLICATIONS/INCORPORATION BY REFERENCE

This application makes reference to, and/or claims priority to and/or claims benefit of:
United States Provisional Patent Application Serial No. 60/448,656, entitled "A Method and System to Provide External Communication Using a Multi-Server Platform Having a Single Switch Backplane" and filed on February 18, 2003;
United States Provisional Patent Application Serial No. 60/456,831, entitled "Method and System to Provide Inter-Blade Server Communication Using a Single Switch Backplane" and filed on March 21, 2003;
United States Provisional Patent Application Serial No. 60/458,719, entitled "Method and System to Provide Inter-Chassis Blade Server Integration for Scalability" and filed on March 28, 2003; and
United States Provisional Patent Application Serial No. 60/463,014, entitled "Method and System to Selectively Steer Data Traffic to Service Blades Using a Single Switch Backplane" and filed on April 15, 2003.

The above stated applications are hereby incorporated herein by reference in their entirety.

### FIELD OF THE INVENTION

Certain embodiments of the invention relate to data traffic steering. More specifically, certain embodiments of the invention relate to a method and system for selectively steering data traffic of various data types to functionally dedicated blade servers within a multi-server platform.

### BACKGROUND OF THE INVENTION

A server may be a computer system in a network that may be accessed by one or more users and/or other computers. The server may provide, for example, access to information such as files, and to services such as communications, printing or other types of services that may be available through a network. In some cases, a special network operating system (OS) may run on a dedicated server, for example, in a large network. A personal computer (PC) operating system may run on a non-dedicated server having, for example, peer-to-peer networking software running thereon.

Generally, a server may have one or more advanced or more powerful central processing units (CPUs), a larger memory, a larger cache and more storage space than a typical single user workstation or personal computer. The server may include, for example, multiple processors which may be dedicated to a particular service or provide a particular function such as e-mail handling, printing or communications. The server may also include devices such as, large power supplies, backup power capabilities such as an uninterruptible power supply (UPS) and various fault tolerant or redundant features such as redundant array of independent disks (RAID) technologies.

A single server may exist in a standalone enclosure and may interface with a network via one or more network interfaces. Multiple standalone boxes may be situated in a central computing center with each standalone box coupled to a network via a respective cable. Each server may interface to the network separately at a particular data rate such as, for example, approximately 1 gigabits/second (Gb/s) for a Gigabit Ethernet or approximately 10 Gb/s for a 10 Gigabit Ethernet.

Thus, the single server in a standalone enclosure may inefficiently utilize large amounts of space and/or power. Furthermore, since each single server may be connected to the network directly via a respective cable, a room full of servers might be overflowing with cables possibly necessitating detailed cable maps which may be quite time-intensive and costly to produce. In addition, single servers in a standalone enclosure may not be easily replaced during failure, particularly when there may be multiple failures. Consequently, the conventional single server in a standalone box may ultimately suffer from a substantial total cost of ownership (TCO).

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

Certain embodiments of the invention provide a method and system for processing data in a server. Aspects of the method for processing data in a server may include receiving at least one packet and determining at least one function associated with the received packet. A determination regarding which one of the blade server handles the function associated with the received packet may be done. The received packet may be steered to at least one of a plurality of blade servers that handles the determined function associated with the received packet. The method may further include generating at least one association between a particular characteristic of a packet and a particular function associated with that packet. One or more of the blade servers may be assigned to handle the particular function associated with a packet. This may be done so that the packet may be identified when received. Notwithstanding, the particular characteristic may be a packet type, a field within the packet and/or a flag within a portion of the packet.

The method may also include processing the steered packet by one or more of the blade servers that handles the determined function. In accordance with an aspect of the invention, a default blade server may be assigned to handle one or more of the received packets. In this regard, at least one of the received packets may be steered to the default blade server if the received packet is unrecognized and/or if the received packet contains particular data. One or more of the blade servers may be configured to control steering of the received packet to at least one of the other blade servers. Accordingly, a switch blade may be utilized to control steering of the received packets.

Another embodiment of the invention may provide a machine-readable storage, having stored thereon, a computer program having at least one code section for processing data in a server. The at least one code section may be executable by a machine, thereby causing the machine to perform the steps as described above for processing data in a server.

Aspects of the system for processing data in a server may include at least one of a plurality of blade servers that may receive at least one packet and determine at least one function associated with the received packet. The blade server may steer one or more received packets to at least one other blade server that handles the determined function. Any one or more of the blade servers may generate or create at least one association between a particular characteristic of a packet and a particular function associated with that packet. In this regard, the particular characteristic may be a packet type, a packet field and/or a flag within a portion of the packet. At least one of the blade servers may be utilized to assign one of the plurality of blade servers to handle the particular function.

Notwithstanding, at least one of the blade servers may be utilized to determine which one of the plurality of blade servers may be utilized to handle the function associated with the received packet. Once a determination has been made, the blade server may process the steered packet that it receives. One or more of the blade servers may be utilized to define a default blade server that may be utilized to handle a received packet. At least one of the blade servers may be utilized to steer one or more packets to the default blade server for processing. Steering a packet to a default blade server may occur if a packet is unrecognized or has no association and/or the packet has particular data contained within the packet. A switch blade may be utilized to control controlling steering of a least one packet to a blade server.
According to an aspect of the invention, a method for processing data in a server is provided, comprising:
receiving at least one packet;
determining at least one function associated with said at least one received packet; and
steering said at least one received packet to at least one of a plurality of blade servers.

According to another aspect of the invention, a method for processing data in a server comprises:
receiving at least one packet;
determining at least one function associated with said at least one received packet; and
steering said at least one received packet to at least one of a plurality of blade servers that handles said determined function.

Advantageously, the method further comprises generating at least one association between a particular characteristic of said packet and a particular function associated with said at least one packet

Advantageously, said particular characteristic is at least one of a packet type, a packet field and a flag.

Advantageously, the method further comprises assigning at least one of said plurality of blade servers for handling said particular function.

Advantageously, the method further comprises determining which of said plurality of blade servers handles said determined at least one function associated with said at least one received packet.

Advantageously, the method further comprises processing said steered at least one received packet by said at least one of a plurality of blade servers that handles said determined function.

Advantageously, the method further comprises assigning a default blade server for handling said at least one received packet.

Advantageously, the method further comprises steering said at least one packet to said default blade server if at least one of:
said at least one received packet is unrecognized; and
said at least one received packet contains a particular data.

Advantageously, the method further comprises controlling steering of said at least one packet by at least one of said plurality of blade servers.

Advantageously, said at least one of said plurality of blade servers controlling said steering is a switch blade.

According to another aspect of the invention, a machine-readable storage having stored thereon, a computer program having at least one code section for processing data in a server, the at least one code section being executable by a machine for causing the machine to perform steps comprising:
receiving at least one packet;
determining at least one function associated with said at least one received packet; and
steering said at least one received packet to at least one of a plurality of blade servers that handles said determined function.

Advantageously, the machine-readable storage further comprises code for generating at least one association between a particular characteristic of said packet and a particular function associated with said at least one packet

Advantageously, said particular characteristic is at least one of a packet type, packet field and a flag.

Advantageously, the machine-readable storage further comprises code for assigning at least one of said plurality of blade servers for handling said particular function.

Advantageously, the machine-readable storage further comprises code for determining which of said plurality of blade servers handles said determined at least one function associated with said at least one received packet.

Advantageously, the machine-readable storage further comprises code for processing said steered at least one received packet by said at least one of a plurality of blade servers that handles said determined function.

Advantageously, the machine-readable further comprises code for assigning a default blade server for handling said at least one received packet.

Advantageously, the machine-readable storage further comprises code for steering said at least one packet to said default blade server if at least one of:
said at least one received packet is unrecognized; and
said at least one received packet contains a particular data.

Advantageously, the machine-readable storage further comprises code for controlling steering of said at least one packet by at least one of said plurality of blade servers.

Advantageously, said at least one of said plurality of blade servers controlling said steering is a switch blade.

According to another aspect of the invention, a system for processing data in a server comprises:
at least one blade server that receives at least one packet;
said at least one blade server determines at least one function associated with said at least one received packet; and
said at least one blade server steers said at least one received packet to at least one of a plurality of other blade servers that handles said determined function.

Advantageously, said at least one blade server and at least one of said plurality of other blade servers generates at least one association between a particular characteristic of said packet and a particular function associated with said at least one packet.

Advantageously, said particular characteristic is at least one of a packet type, a packet field, and a flag.

Advantageously, said at least one blade server and said at least one of said plurality of other blade servers assigns at least one of said plurality of blade servers to handle said particular function.

Advantageously, said at least one blade server determines which of said plurality of other blade servers handles said determined at least one function associated with said at least one received packet.

Advantageously, said at least one of said plurality of other blade servers that handles said determined function processes said steered at least one received packet.

Advantageously, said at least one blade server and at least one of said plurality of other blade servers assigns a default blade server for handling said at least one received packet.

Advantageously, said at least one blade server and at least one of said plurality of other blade servers steers said at least one packet to said default blade server if at least one of:
said at least one received packet is unrecognized; and
said at least one received packet contains a particular data.

Advantageously, the system further comprises controlling steering of said at least one packet by said at least blade server.

Advantageously, said at least one blade server that controls said steering is a switch blade.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram of an embodiment of a multi-server platform in accordance with an embodiment of the present invention.

FIG. 2 is a block diagram illustrating an embodiment of a communication system including a multi-server platform and an external network, in accordance with various aspects of the invention.

FIG. 3 is a flowchart illustrating an embodiment of a method to selectively steer data traffic to service blades in the multi-server platform of FIG. 2, in accordance with various aspects of the invention.

FIG. 4 is a block diagram illustrating an embodiment of a communication system including a multi-server platform and an external network, which may be utilized for data steering in accordance with various aspects of the invention

FIG. 5 is a flowchart illustrating exemplary generic steps for steering traffic in accordance with and embodiment of the present invention.

### DETAILED DESCRIPTION OF THE INVENTION

Certain embodiments of the invention may include selective steering of data traffic of various data types to functionally dedicated blade servers. Certain embodiments of the invention provide a method and system for processing data in a server. Aspects of the method for processing data in a server may involve receiving a packet and determining a function associated with the received packet. The blade server handling the function associated with the received packet may be determined. Accordingly, the received packet may be steered to one or more of a plurality of blade servers that may handle the determined function associated with the received packet. At least one association may be generated or created between a particular characteristic of a packet and a particular function associated with that packet. At least one blade server may be assigned to handle the particular function associated with a packet. The particular characteristic of the packet may include, but is not limited to, a packet type, a field within the packet and/or a flag within a portion of the packet.

In accordance with an aspect of the invention, steered packets may be processed by at least one of the blade servers that may be adapted to handle the function associated with the packets. A default blade server may be assigned to handle one or more of the received packets and one or more received packets may be steered to the default blade server if the received packet is unrecognized and/or contains particular data. One or more of the blade servers may be configured to control steering of the received packet to at least one of the other blade servers. In this regard, a switch blade may be utilized to control steering of the received packets.

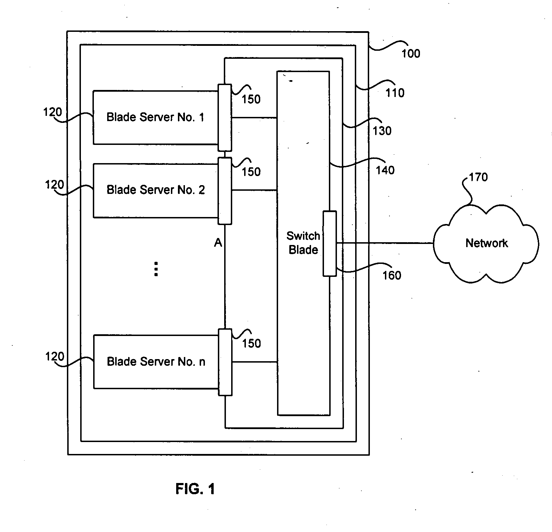

FIG. 1 is a block diagram of an embodiment of a multi-server platform 100 in accordance with an embodiment of the present invention. The multi-server platform 100 may include a chassis 110, a backplane 130, a switch blade 140, blade server interfaces 150, and a plurality of blade servers No. 1, No. 2, ..., No. n, collectively referenced as 120.

The chassis 110 may include the backplane 130. However, although only one backplane 130 is shown, the invention is not so limited and a plurality of backplanes may be provided within the chassis 110. In this regard, one or more backplanes may be coupled together. In a case where the chassis 110 may include a single backplane, the backplane may be regarded as a common backplane, which may provide connectivity for the blade servers 120. The chassis 110 may be part of a single installation enclosure that includes a plurality of blade server slots which may be adapted receiving one or more of the blade servers 120.

The backplane 130 may include, for example, one or more blade server interfaces collectively referenced as 150, which may be referred to as blade server interconnects. In this regard, the chassis 110 may include a plurality of blade server slots that may be adapted to facilitate connection between the blade servers and the blade server interfaces 150. In other words, the blade server slots may provide a conduit for coupling the blade servers 120 to the blade server interfaces 150. The backplane 130 may also include one or more interfaces such as a network interface 160. The network interface 160 may be referred to as network interconnect.

The switch blade 140 may be part of the backplane 130. In this regard, the switch blade 140 may be integrated within the backplane 130 or it may be a plug-in card that may be plugged into the backplane 130.

The blade servers 120 may be coupled to the backplane 130 via the blade server interfaces 150. Each of the blade servers 120 may therefore be coupled to a corresponding one of the server interfaces 150. For example, each of the blade servers 120 may be plugged into or removably mounted in a corresponding blade server slot in the chassis 110 so that it interfaces with a corresponding one of the server interfaces. In this regard, the blade servers 120 may be coupled to the backplane 130.

Once the blade servers 120 are mounted or plugged into the chassis 110, the blade servers 120 may be coupled to the switch blade 140 of the backplane 130 via the blade server interfaces 150. The backplane 130 may be adapted to provide connectivity, for example, between two or more of the blade servers 120. Furthermore, the backplane 130 and/or the switch blades 140 may provide connectivity between the one or more of the blade servers 120 and the network 170.

The network interface 160 facilitates connectivity between the backplane 130 and the network 170. In this regard, the network interface 160 may couple backplane 130 and/or one or more of the plurality of switch blades 140 to the network 170.

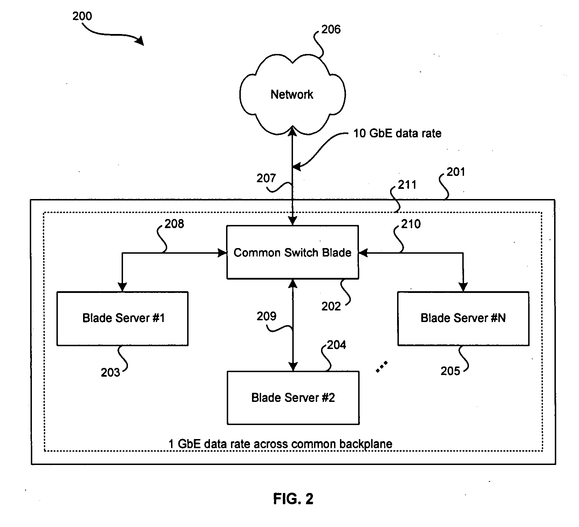

FIG. 2 is a block diagram illustrating an embodiment of a communication system 200 including a multi-server platform 201 and an external network 206, in accordance with various aspects of the invention. The multi-server platform 201 may include a chassis having a common backplane 211, a common switch-blade 202 and a plurality of blade servers including, a blade server #1 203, a blade server #2 204, ..., blade server #N 205, where N may be any integer number.

Each of the blade servers #1, #2, ..., #N may be a server that has been integrated on a single plug-in card or blade that may be plugged into a blade server slot of the chassis with the common backplane 211. The chassis with a common backplane 211 may provide a single installation enclosure for the multiple blade servers #1, #2, .., #N.

The chassis with the common backplane 211 may also serve a common interface between each blade server 203, 204, 205 and the common switch blade 202. For example, common backplane 211 may provide a common backplane interface 208 between blade server #1 203 and the common switch blade 202. Common backplane 211 may also provide a common backplane interface 209 between blade server #2 204 and the common switch blade 202. Finally, common backplane 211 may provide a common backplane interface 210 between blade server #N 205 and the common switch blade 202. In this regard, the common backplane interfaces 208, 209, 210 are part of the common backplane 211.

The common switch blade 202 may include N+1 interfaces and at least a portion of these interfaces may be adapted to perform packet switching of data frames between the N blade servers and the external network 206, in accordance with an embodiment of the invention. The common switch-blade may include intelligence that may manage and distribute data traffic to the relevant blade servers including blade server #1, #2, ..., #N. The common switch-blade 202 may interface with each of the N blade servers via the common backplane 211. The common switch-blade 202 may also interface with the external network 206, thereby resulting in N+1 interfaces.

In accordance with an embodiment of the invention, the external network 206 may include a 10 Gigabit Ethernet network connection and interface. The external interface 207 between the common switch blade 202 and the external network 206 may include a 10 Gigabit Ethernet (GbE) interface, operating at a data rate of 10 Gb/s. In this regard bi-directional network communication capability may be provided between the external network 206 and the common switch blade 202. In order to facilitate Gigabit Ethernet communication, the common backplane 211 may include a plurality of Gigabit Ethernet (GbE) interfaces. The switch blade 202 may communicate with each of the N blade servers independently over the common backplane 211 at a data rate of 1 Gb/s. For example, the blade server #1 203 may communicate in a bi-directional manner with the common switch-blade 202 via the common backplane interface 208. The blade server #2 204 may also communicate in a bi-directional manner with the common switch blade 202 via the common backplane interface 209. Finally, the blade server #N 105 may communicate in a bi-directional manner with the common switch blade 202 via the common backplane interface 210.

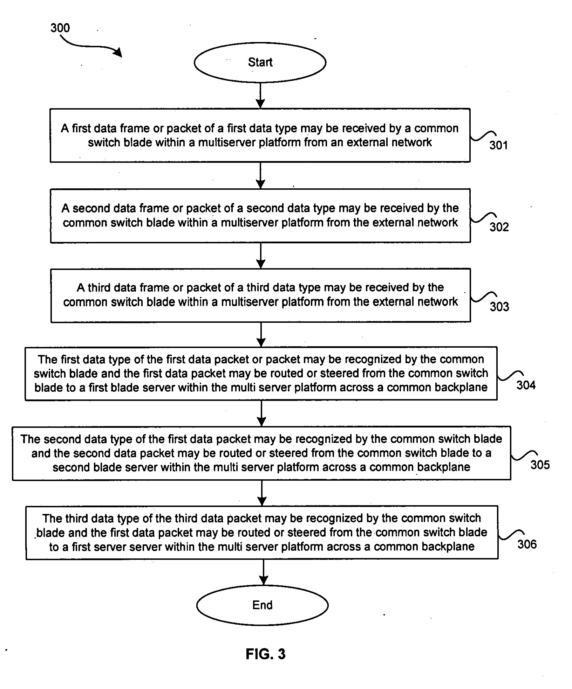

FIG. 3 is a flowchart illustrating an embodiment of a method 300 to selectively steer data traffic to service blades in the multi-server platform 100 of FIG. 2, in accordance with various aspects of the invention. Referring to FIG. 3, in step 301, a first data frame or packet of a first data type may be received by a common switch blade within a multi-server platform from an external network. In step 302, a second data frame or packet of a second data type may be received by the common switch blade within a multi-server platform from an external network. In step 303, a third data frame or packet of a third data type may be received by the common switch blade within a multi-server platform from an external network. In step 304, the first data type of the first data frame may be recognized by the common switch-blade, and the first data frame may be steered from the common switch-blade to a first blade server within the multi-server platform across a common backplane. In step 305, the second data type of the second data frame may be recognized by the common switch-blade, and the second data frame may be steered from the common switch-blade to a second blade server within the multi-server platform across the common backplane. In step 306, the third data type of the third data frame may be recognized by the common switch-blade, and the third data frame may be steered from the common switch-blade to a third blade server within the multi-server platform across the common backplane.

In accordance with an embodiment of the present invention, each of the plurality of blade servers #1, #2, ..., #N may be dedicated to providing a different, specific function within the multi-server platform 101. For example, referring to Fig. 2, the common switch blade 202 may receive a data frame corresponding to an encrypted data type from the external network 206. The common switch blade 202 may recognize the encrypted data type of the data frame and steer the data frame across the common backplane 211 to the blade server 203, which is dedicated to decrypting data frames.

The common switch blade 202 may receive a data frame of a particular data type from a particular source on the external network 206. The source of the data frame may be unfamiliar or unrecognizable by the common switch blade 202. In this regard, the particular source associated with the received data frame may not be an authorized source for communication data on the external network. Accordingly, the common switch blade 202 may steer the data frame to the blade server 204, which may be configured as a dedicated server for performing authentication and/or intrusion detection. The blade server 204 may process the received data frame and recognize that a hacker may be attempting an unauthorized access into the multi-server platform 101 via the external network 106. In this regard, the intrusion may be thwarted and any appropriate sub-system and/or authority notified.

In another example, the common switch blade 202 may receive a data frame corresponding to a database application hosted on the multi-server platform 201. The common switch blade may recognize that the data frame corresponds to the database application and may accordingly steer the data frame to the blade server 205. The blade server 205 may have been configured to function as a database acceleration engine that may be utilized to decrease the load on other database servers within the multi-server platform 201. In this regard, the blade server 205 may be configured to offload excess traffic from other database servers that may be coupled to the network.

Other blade servers in the multi-server platform may be dedicated to performing functions such as virus scanning, firewall applications, email applications, short message service (SMS), voice processing and printing, for example. In this regard, the method and system may provide selective steering of data traffic of various data types to functionally dedicated blade servers within a multi-server platform. A common switch-blade within a multi-server platform steers data frames to the appropriate blade servers within the multi-server platform across a common backplane. In one aspect of the invention, in order to provide redundancy, various functions may be duplicated on the blade servers throughout the multiserver platform.

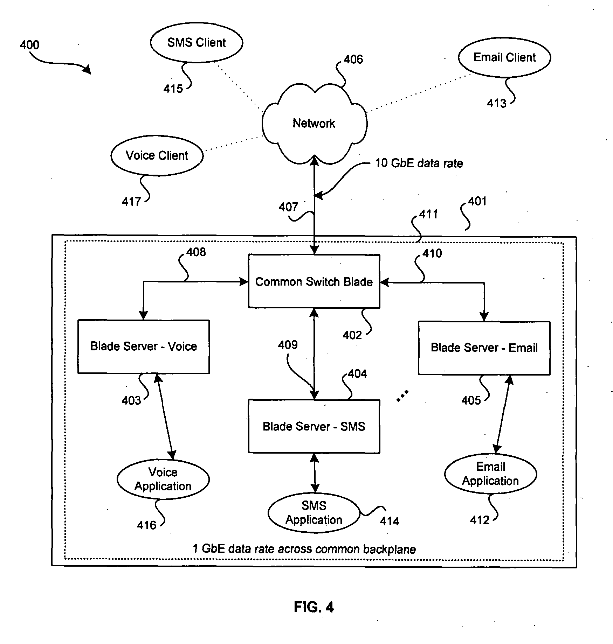

FIG. 4 is a block diagram illustrating an embodiment of a communication system 400 including a multi-server platform 401 and an external network 406, which may be utilized for data steering in accordance with various aspects of the invention. The multi-server platform 401 may include a chassis having a common backplane 411, a common switch blade 402 and a plurality of server blades 403, 404, 405. The multiserver platform 401 may also include a voice application 416, a voice client 417, a short message server (SMS) application 414, a short message server client 415, an email application 412 and an email client 413. The multiserver platform 401 is similar to the multiserver platform 201 of FIG. 2, except the former illustrates the voice application 416, the voice client 417, the short message service application 414, the short message service client 415, the email application 412 and the email client 413.

The multi-server platform 401 may also include a chassis with a common backplane 411 that may also provide a common backplane interface between each blade server 403, 404, 405 and the common switch blade 402. In this regard, the common backplane 411 may provide a common backplane interface 408 between blade server 403 and the common switch blade 402. The common backplane 411 may also provide a common backplane interface 409 between blade server 404 and the common switch blade 402. Finally, common backplane 411 may provide a common backplane interface 410 between blade server 405 and the common switch blade 402. The common backplane interfaces 408, 409, 410 may be integrated into the backplane 411 or otherwise coupled to the common backplane 411.

The voice application 416, the short message service application 414 and the email application 412 may be software applications that may run on the multiserver platform 401. Notwithstanding, the voice application 416 may have one or more components that may run in the blade server 403 and the short message service application 414 may have one or more components that may run on the blade server 404. Finally, the email application 412, may also have one or more components that may run on the blade server 405. The voice client 417 may be an Internet protocol (IP) telephone, the SMS client 415 may be a hybrid telephone/PDA and the email client 413 may be a handheld computer, for example.

The blade server 403 may be adapted to handle voice processing, which may be processed by the voice application 416. The blade server 404 may be adapted to handle short message service, which may be processed by the short message service application 414. Finally, the blade server 405 may be adapted to handle email, which may be processed by the email application 412.

In one aspect of the invention, the common switch blade 402 may include suitable software and/or hardware that may be utilized to determine what functions should service a particular type or kind of received message. Based on the function that may be associated with the received messages, the common switch blade may steer the message to an appropriate blade server offering a corresponding processing function. In one embodiment of the invention, one or more association tables may be created that contain entries that associate various types of messages to various types of functions and their corresponding processing entities. For example, the blade server 403 may be associated with the processing of voice messages. As an illustration, text-to-speech (TTS) processing and speech encoding and transcoding functions may be associated with blade server 403 and its associated voice application 416. In another example, the blade server 404 and/or short message service application 414-may be associated with the processing of short message service messages. In this regard, any messages received by the common switch blade 402 relating to short message server functions may be steered to the blade server 404 and/or its corresponding short message service application 414. Finally, the blade server 405 and/or email application 412 may be associated with the processing of email messages. As a result, received messages that may be associated with the email function may be steered to the blade server 405 for processing. The associations may be stored in a memory of the blade server as a lookup table. The lookup table may be updated anytime there are new associations or when associations have changed.

In an illustrative embodiment of the invention, an email message originating from the email client 413 may be steered to the common switch blade 402 via the network 406 and an external interface 407. The external interface 407 may be located between the common switch blade 402 and the external network 406. Upon receipt of the email message by the common switch blade 402, the common switch blade 402 may examine the received message and determine that it may be related to an email function based on, for example, a lookup table entry. Accordingly, the common switch blade 402 may steer the email message to the blade server 405 via the interface 410 where it made be processed by the blade server 405 and/or the email application 412. On the other hand, an email message originating from the email application 412 and/or the blade server 405 may be communicated to the common switch blade 402 via the interface 410. Upon receiving the email message from the blade server 405, the common switch blade 402 may determine that the email is destined for the email client 413. Accordingly, the common switch blade 402 may steer the email message to the email client 413 via the network 406.

In a similar manner, a short message service message originating from the short message service client 415 may be steered to the common switch blade 402 via the network 406 and an external interface 407. Upon receipt of the short message service message by the common switch blade 402, the common switch blade 402 may examine the message and determine that it is associated with an email function. Accordingly, the common switch blade 402 may steer the short message service message to the blade server 404 via the interface 409 where it may be processed by the blade server 404 and/or the short message service application 414. A voice message originating from the voice client 417 may be steered to the common switch blade 402 via the network 406 and an external interface 407. Upon receipt of the voice message by the common switch blade 402, the common switch blade 402 may examine the message and determine that it is associated with a voice function. Accordingly, the common switch blade 402 may steer the voice message to the blade server 403 via the interface 408 where it may be processed by the blade server 403 and/or the voice application 416.

The integration of multiple blade servers into a multi-server platform 100 may provide an increased server density and easier management of the multiple servers since all the servers are situated in a single installation enclosure. Additionally, the integration of multiple blade servers may provide a more scalable system with greater reliability. With regard to scalability, more servers may be readily added, provisioned or commissioned to facilitate increased traffic and more servers may be readily removed to facilitate decreased traffic. The integration of multiple blade servers within a single enclosure may more readily facilitate the implantation of fault tolerance and redundancy. Accordingly, the redundancy may ultimately result in substantial reliability and significantly reduced downtime.

In accordance with another aspect of the invention, at least a portion of the blade servers 120 may include one or more of the characteristics as set forth below. The blade server 120 may be modular and self-contained, and may include, for example, a server on a card or a single-board computer (SBC). The blade server 120 may include for example, a computer disposed in an ultra-dense card or board. The ultra-dense card may include, but is not limited to, a central processing unit (CPU), a memory, a hard disk and networking components. The blade server 120 may be hot swappable, hot pluggable and/or adapted for plug-and-play capability. The chassis 110 may provide sharing among the blade servers 120 for one or more of the following: power supplies, cooling fans and access to the network 170 or storage.

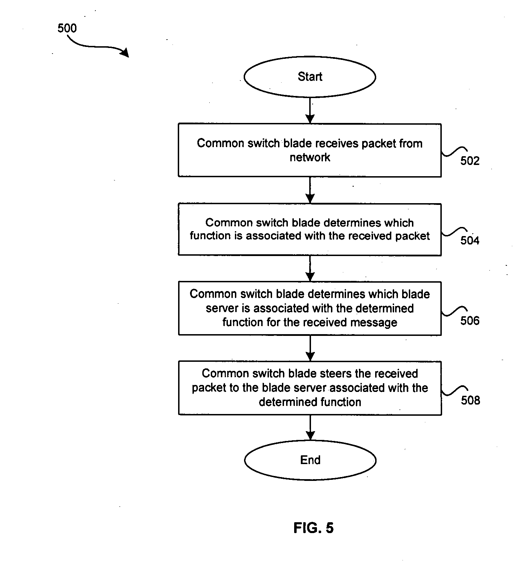

FIG. 5 is a flowchart illustrating exemplary generic steps for steering traffic in accordance with and embodiment of the present invention. In step 502, the common switch blade of the multi-server platform receives a packet such as a data packet via the network 170. In step 504, common switch blade may determine which function is associated with the received message. In step 506, the common switch blade may determine which blade server is associated with the determine function for the received message. In step 508, the common switch blade steers the received packet to the blade server associated with the determined function.

With reference to step 504, the switch blade may analyze the packet to determine one or more characteristics that may assist in determining to which of the blade server or blades 120 the packet may be transmitted. In one embodiment, the characteristic may be, for example, a particular field value in a frame of the packet. In another embodiment, the characteristic may be, for example, an enabled or disabled flag in a frame of the packet. In yet another embodiment, the characteristic may be, for example, a particular packet type. Notwithstanding, a particular data type may be processed by a particular blade server 120 and the message may be steered to one or more blade servers for processing.

In accordance with an aspect of the invention, at least a portion of the blade servers 120 may be dedicated to providing different, specific functions within the multi-server platform 100. In one embodiment according to the present invention, if the switch blade 140 receives an encrypted data type from the network 170 and if the switch blade 140 recognizes that the data frame is an encrypted data type, then the switch blade 140 may steer the data frame to the particular blade server 120 that is dedicated to decrypting encrypted data frames. In another embodiment of the invention, if the switch blade 140 receives a packet associated with a database application hosted on the multi-server platform 100 and if the switch blade 140 recognizes the packet type, then the switch blade 140 may steer the packet to a blade server 120 that may be configured, for example, as a database acceleration engine, thereby decreasing the load on other database servers within the multi-server platform 100. Other blade servers in the multi-server platform 100 may be dedicated to perform, for example, virus detection, firewall applications, mission-critical applications, e-mail applications, and printing, as well as other applications, operations and tasks.

Some embodiments of the invention may include alerting the switch blade 140 when a particular packet type is received or when a particular packet is received from a particular source. In this regard, the switch blade 140 may reject or refuse to steer packets from unknown, unfamiliar or unauthorized sources. Accordingly, some received packets may be processed by a default handler if no blade server has been specified to handle a function associated with the message. As a result, the switch blade 140 may steer the packets from unknown, unfamiliar or unauthorized sources to a particular blade server that is dedicated to performing intrusion detection or other types of threat assessment. For example, the particular dedicated blade server may determine that an attack is in progress from an attacker or a hacker linked via the network 170.

In light of the foregoing, aspects of the system for processing data in a server may include at least one of a plurality of blade servers that may receive at least one packet and determine at least one function associated with the received packet. The blade server may steer one or more of the packets that are received one or more other blade servers that may be adapted to handle the determined function. Any of the blade servers may be utilized to generate or create at least one association between a particular characteristic of a packet and a particular function associated with that packet. The particular characteristic may be a packet type, a packet field and/or a flag within a portion of the packet. Similarly, one or more blade servers may be utilized to assign a particular blade server to handle the particular function.

In another aspect of the invention, at least one of the blade servers may be utilized to determine which one of the plurality of blade servers may be utilized to handle the function associated with the received packet. Once a determination has been made, the blade server may process the steered packet that it receives. One or more of the blade servers may be utilized to define a default blade server that may be utilized to handle a received packet. At least one of the blade servers may be utilized to steer one or more packets to the default blade server for processing. Steering a packet to a default blade server may occur if a packet is unrecognized or has no association and/or the packet has particular data contained within the packet. A switch blade may be utilized to control controlling steering of a least one packet to a blade server.

Accordingly, the present invention may be realized in hardware, software, or a combination of hardware and software. The present invention may be realized in a centralized fashion in one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for processing data in a server, the method comprising:
receiving at least one packet;
determining at least one function associated with said at least one received packet; and
steering said at least one received packet to at least one of a plurality of blade servers.

2. The method according to claim 1, wherein said at least one blade server handles said determined function.

3. The method according to claim 1 or 2, further comprising generating at least one association between a particular characteristic of said packet and a particular function associated with said at least one packet

4. The method according to claim 3, wherein said particular characteristic is at least one of a packet type, a packet field and a flag.

5. A machine-readable storage having stored thereon, a computer program having at least one code section for processing data in a server, the at least one code section being executable by a machine for causing the machine to perform steps comprising:
receiving at least one packet;
determining at least one function associated with said at least one received packet; and
steering said at least one received packet to at least one of a plurality of blade servers that handles said determined function.

6. The machine-readable storage according to claim 5, further comprising code for generating at least one association between a particular characteristic of said packet and a particular function associated with said at least one packet

7. The machine-readable storage according to claim 6, wherein said particular characteristic is at least one of a packet type, packet field and a flag.

8. A system for processing data in a server, the system comprising:
at least one blade server that receives at least one packet;
said at least one blade server determines at least one function associated with said at least one received packet; and
said at least one blade server steers said at least one received packet to at least one of a plurality of other blade servers that handles said determined function.

9. The system according to claim 8, wherein said at least one blade server and at least one of said plurality of other blade servers generates at least one association between a particular characteristic of said packet and a particular function associated with said at least one packet

10. The system according to claim 9, wherein said particular characteristic is at least one of a packet type, a packet field, and a flag.
